# EUROPÄISCHE PATENTSCHRIFT

(11) **EP 2 416 990 B1**
(45) Veröffentlichungstag und Bekanntmachung des Hinweises auf die Patenterteilung: **23.09.2015**
(21) Anmeldenummer: 10713571.7
(22) Anmeldetag: 01.04.2010
(51) Int. Cl.: B60R 13/04

(54) **BLENDE FÜR EIN KRAFTFAHRZEUG**
PANEL FOR A VEHICLE
PANNEAU POUR UN VÉHICULE

(30) Priorität: 07.04.2009 DE 102009016760
(43) Veröffentlichungstag der Anmeldung: 15.02.2012
(73) Patentinhaber: DURA Automotive Body and Glass Systems GmbH, 58840 Plettenberg (DE)
(72) Erfinder: GERNDORF, Ralf, 57413 Finnentrop (DE); SCHULZE ZUR WIESCHE, Jochen, 51143 Köln (DE); BITTNER, Norfried, 58452 Witten (DE); NÜSKEN, Axel, 58762 Altena (DE); SCHULTE, Martin, 58802 Balve (DE)
(74) Vertreter: Zinnecker, Armin
(86) Internationale Anmeldenummer: PCT/EP2010/002109
(87) Internationale Veröffentlichungsnummer: WO 2010/115585

(56) Entgegenhaltungen:
- DE-A1- 10 058 527
- DE-U1- 20 313 996
- US-A1- 2006 114 685
- US-A1- 2006 176 710
- US-A1- 2009 085 368

## Beschreibung

Die Erfindung betrifft eine Blende oder ein sonstiges Zierteil aus Kunststoff für ein Fahrzeug, insbesondere für ein Kraftfahrzeug, mit einer ersten Komponente aus Kunststoff und mit einer zweiten Komponente aus Kunststoff.

Eine derartige Blende ist aus der EP 1 695 808 A1 bekannt. Die vorbekannte Blende umfaßt eine erste Komponente aus Kunststoff, nämlich ein Deckteil aus einem thermoplastischen Kunststoff, und eine zweite Komponente aus Kunststoff, nämlich ein Trägerteil aus einem thermoplastischen Kunststoff. Die erste Komponente ist an einer Sichtfläche der Blende vorgesehen. Sie übernimmt eine dekorative Funktion. Die zweite Komponente übernimmt mechanische Funktionen, insbesondere eine Befestigungsfunktion. Die Blende ist in einem Mehrkomponenten-Spritzgußverfahren, insbesondere in einem Zweikomponenten-Spritzgußverfahren (2-K-Verfahren) hergestellt.

Aus der US 2006/176710 A1 ist eine Blende aus Kunststoff für ein Fahrzeug nach dem Oberbegriff des Anspruchs 1 bekannt.

Die US 2006/114685 A1 offenbart eine Anordnung, bei der das Licht einer Lichtquelle von einem Reflektor auf ein Bildelement mit undurchsichtigen und durchsichtigen Teilen zurückgeworfen wird.

Aus der DE 203 13 996 U1 ist ein Verkleidungselement bekannt, das einen kreisförmigen Durchbruch aufweist, in den ein Leuchtelement eingesetzt ist.

Die DE 100 58 527 A1 offenbart eine Abdeckung für ein Fahrzeug, die durch eine Ultraschallschweißverbindung mit einer Oberfläche verbunden werden kann.

Aufgabe der Erfindung ist es, eine verbesserte Blende der eingangs angegebenen Art vorzuschlagen.

Erfindungsgemäß wird diese Aufgabe durch die Merkmale des Anspruchs 1 gelöst. Die erfindungsgemäße Blende aus Kunststoff für den Außenbereich eines Fahrzeugs für eine der Säulen des Fahrzeugs und/oder für eine Fahrzeugtüre umfasst eine erste Komponente aus Kunststoff, die eine Dekorationsfläche oder Deckfläche bildet und die zumindest teilweise transparent oder semitransparent ist, sowie eine zweite Komponente aus Kunststoff, die hinter der ersten Komponente liegt. Die zweite Komponente weist eine oder mehrere Aussparungen für ein Tastenfeld und/oder für einen Sensor auf, wobei das Tastenfeld, das Anzeigeelemente aufweist, und/oder der Sensor in der oder den Aussparungen angeordnet ist bzw. sind. Auf diese Weise ist es möglich, die Blende zur Anzeige von Informationen zu nutzen. Ferner kann die Blende zur Eingabe von Informationen genutzt werden. Es können auch mehrere Anzeigeelemente und/oder Eingabeelemente vorhanden sein.

Erfindungsgemäß ist die erste Komponente zumindest teilweise transparent oder semitransparent. In diesem Fall erstreckt sich der transparente oder semitransparente Bereich der ersten Komponente über einen Teilbereich dieser ersten Komponente. Die erste Komponente kann allerdings auch vollständig transparent oder semitransparent sein. In diesem Fall ist der gesamte Bereich der ersten Komponente transparent oder semitransparent. In beiden Fällen erstreckt sich der transparente oder semitransparente Bereich der ersten Komponente vollständig oder teilweise über die Aussparung oder die Aussparungen in der zweiten Komponente.

Die erste Komponente liegt vorzugsweise an einer Außenseite der Blende. Sie kann von einer oder mehreren weiteren Schichten abgedeckt sein, insbesondere von einem Überzug, wobei diese weitere Schicht oder weiteren Schichten oder der Überzug vollständig oder teilweise transparent oder semitransparent sind. Vorzugsweise bildet die erste Komponente eine Sichtfläche an dem Fahrzeug bzw. Kraftfahrzeug, vorzugsweise an der Außenseite, möglicherweise allerdings auch an der Innenseite, des Fahrzeugs oder Kraftfahrzeugs.

Es ist möglich, daß die Blende weitere Komponenten und/oder Schichten und/oder Bestandteile aufweist. Erfindungsgemäß ist die Blende in einem Mehrkomponenten-Spritzgußverfahren hergestellt, insbesondere in einem Zweikomponenten-Spritz-gußverfahren (2-K-Verfahren) oder in einem Dreikomponenten-Spritzgußverfahren (3-K-Verfahren).

Das Tastenfeld und/oder der Sensor sind selbstleuchtend oder beleuchtbar. Das Tastenfeld und/oder der Sensor können durch ein Beleuchtungsmittel beleuchtbar sein. Als Beleuchtungsmittel geeignet sind insbesondere LEDs, farbregelbare Folien (beispielsweise eine Dreischicht-RGB-Folie) oder ein Elektrolumineszenz-Leuchtelement. Sowohl bei selbstleuchtenden Anzeigeelementen/Eingabeelementen als auch bei beleuchteten Anzeigeelementen/Eingabeelementen können die Leuchtfarbe und/oder die Leuchtintensität veränderbar sein.

Vorteilhafte Weiterbildungen sind in den Unteransprüchen beschrieben.

Die erste Komponente besteht vorzugsweise aus einem thermoplastischen Kunststoff. Besonders geeignet sind PMMA oder PC oder artverwandte Kunststoffe. Die erste Komponente kann insbesondere aus kratzfestem PMMA oder einem sonstigen kratzfesten Kunststoff bzw. thermoplastischen Kunststoff bestehen.

Vorteilhaft ist es, wenn die erste Komponente eine glänzende, durchgehende, vorwiegend glatte Oberfläche aufweist. Stattdessen oder zusätzlich kann die erste Komponente Erhebungen aufweisen, insbesondere Erhebungen in Form eines Schriftzuges oder Logos.

Nach einer weiteren vorteilhaften Weiterbildung besteht die zweite Komponente aus einem thermoplastischen Kunststoff. Besonders geeignet sind ABS, ABS/PC oder ASA oder artverwandte Kunststoffe.

Eine weitere vorteilhafte Weiterbildung ist dadurch gekennzeichnet, daß an der zweiten Komponente eines oder mehrere Befestigungselemente zur Befestigung des Tastenfelds und/oder des Sensors vorgesehen sind. Das Tastenfeld und/oder der Sensor können unmittelbar oder mittelbar an dem oder den Befestigungselementen befestigt sein. Vorteilhaft ist es, wenn das oder die Befestigungselemente an der zweiten Komponente angeformt sind.

Nach einer weiteren vorteilhaften Weiterbildung ist an der zweiten Komponente ein Gehäuse für das Tastenfeld und/oder für den Sensor befestigbar oder befestigt. Das Gehäuse ist vorzugsweise abdichtbar oder abgedichtet. Besonders vorteilhaft ist es, wenn das Gehäuse an einem oder mehreren Befestigungselementen an der zweiten Komponente befestigbar oder befestigt ist.

Das oder die Anzeigeelemente und/oder das oder die Eingabeelemente und/oder das oder die Beleuchtungsmittel für das oder die Anzeigeelemente und/oder das oder die Eingabeelemente können durch Sensoren und/oder Schalter aktivierbar und/oder veränderbar sein.

Durch das Anzeigeelement können insbesondere
der Ladezustand eines Fahrzeugs mit Batterieantrieb
und/oder eine Grafik, ein Schriftzug und/oder ein Logo
und/oder ein Blinker
und/oder eine Verriegelungsinformation
und/oder ein Reflektor
und/oder eine Parkzeitinformation
und/oder eine Taxiinformation
anzeigbar sein.

Erfindungsgemäß ist vorgesehen, dass das Eingabeelement ein Tastenfeld und/oder einen oder mehrere Sensoren, insbesondere einen Fingerprint-Sensor und/oder einen Sensor für ein Keyless-Go-System, umfaßt.

Die Erfindung betrifft ferner ein Fahrzeug, insbesondere ein Kraftfahrzeug, das durch eine oder mehrere erfindungsgemäße Blenden oder sonstige Zierteile gekennzeichnet ist.

Ausführungsbeispiele der Erfindung werden nachstehend anhand der beigefügten Zeichnung im einzelnen erläutert. In der Zeichnung zeigt
- Fig. 1: ein Kraftfahrzeug mit erfindungsgemäßen Blenden in einer Seitenansicht,
- Fig. 2: eine Blende mit einer Ladekontrollanzeige für ein Kraftfahrzeug mit Batterieantrieb in einer Ansicht von außen,
- Fig. 3: die Blende gemäß Fig. 2 in einer Ansicht von innen,
- Fig. 4: die Fig. 2 mit einer vergrößerten Ausschnittdarstellung,
- Fig. 5: eine vergrößerte Teilansicht der Fig. 3,
- Fig. 6: den Gegenstand der Fig. 5 bei abgenommenem Gehäuse,
- Fig. 7: eine verkleinerte Darstellung der Fig. 3 einschließlich einer Schnittlinie IX-IX,
- Fig. 8: das in Fig. 3, 5 und 7 gezeigte Gehäuse in einer Ansicht von unten,
- Fig. 9: einen Schnitt längs der Linie IX-IX in Fig. 7,
- Fig. 10: eine weitere Ausführungsform einer Blende mit einem Zugangssystem in einer perspektivischen Darstellung,
- Fig. 11: die Blende gemäß Fig. 10 in einer Ansicht von außen,
- Fig. 12: eine Abwandlung der Blende gemäß Fig. 10 und 11 in einer perspektivischen Darstellung,
- Fig. 13: die Blende gemäß Fig. 12 in einer Ansicht von außen,
- Fig. 14: einen Schnitt längs der Linie A-A in Fig. 11,
- Fig. 15: eine vergrößerte Darstellung eines Teils der Fig. 14 und
- Fig. 16: ein weiteres Ausführungsbeispiel für eine Blende mit einem Tastenfeld zur Eingabe eines Zugangscodes eines Kraftfahrzeugs in einem Längsschnitt.

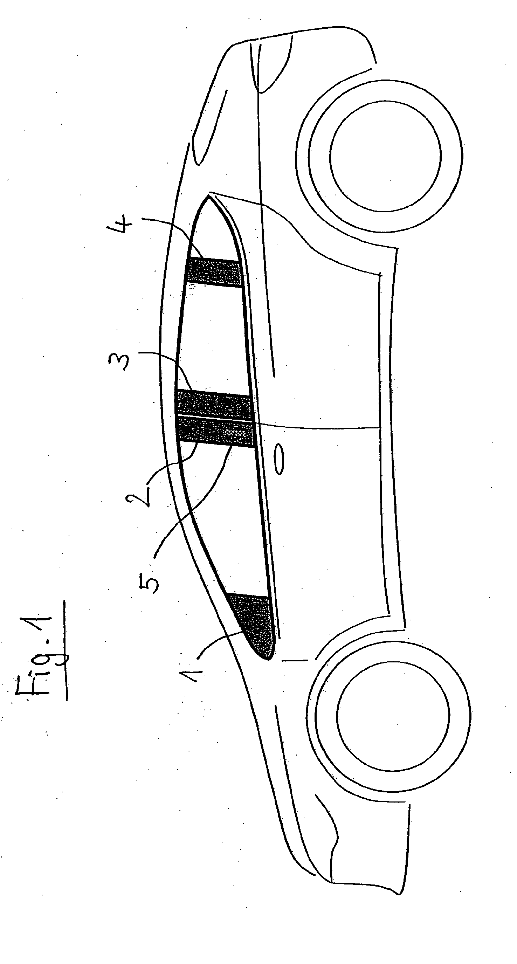

Das in Fig. 1 gezeigte Kraftfahrzeug weist mehrere Blenden auf, nämlich eine Spiegelblende 1 im Bereich des Rückspiegels, eine hintere Blende 2 der Vordertür, eine vordere Blende 3 der Hintertür und eine hintere Blende 4 der Hintertür. In der Blende 2 ist ein Anzeigeelement 5 zur Anzeige von Informationen vorhanden.

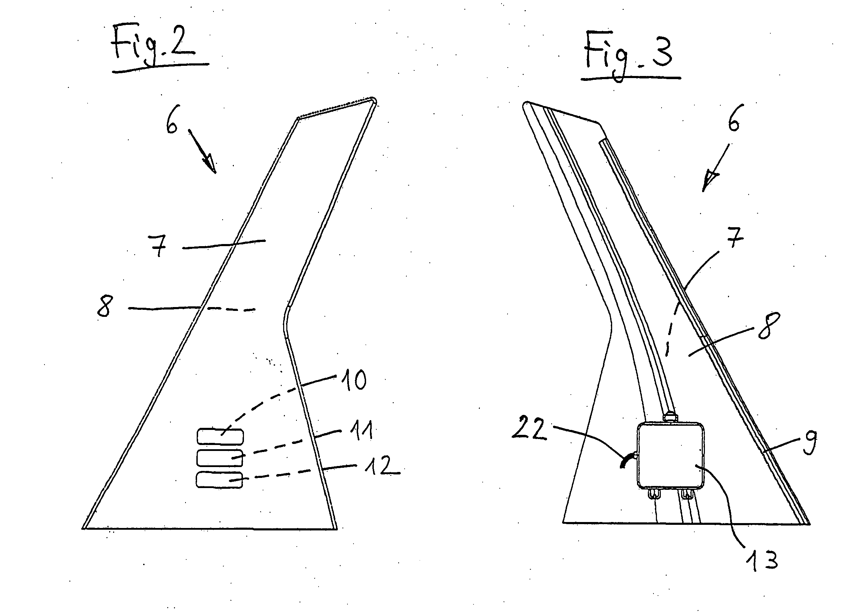

Fig. 2 und 3 zeigen eine weitere Blende 6 für ein Kraftfahrzeug in einer Ansicht von außen und innen. Die Blende 6 ist in einem Zweikomponenten-Spritzgußverfahren hergestellt. Die erste Komponente 7 besteht aus kratzfestem PMMA. Sie ist vollständig, also in ihrem gesamten Bereich semitransparent. Die erste Komponente 7 weist eine glänzende, durchgehende, vorwiegend glatte Oberfläche ohne Ausschnitte auf.

Die zweite Komponente 8 ist aus ABS hergestellt. Sie weist eine schwarze Farbe auf. Sie liegt hinter der die Sichtfläche bildenden ersten Komponente 7. An der zweiten Komponente 8 ist eine Leiste 9 zur Befestigung der Blende 6 an dem Kraftfahrzeug vorgesehen, nämlich angeformt.

Die zweite Komponente 8 weist drei Aussparungen 10, 11, 12 auf (siehe Fig. 2), die jeweils eine rechteckige, abgerundete Form haben und die bündig und im Abstand voneinander untereinander angeordnet sind. In Fig. 3 sind die Aussparungen 10, 11, 12 von einem Gehäuse 13, das an der zweiten Komponente 8 befestigt ist, abgedeckt.

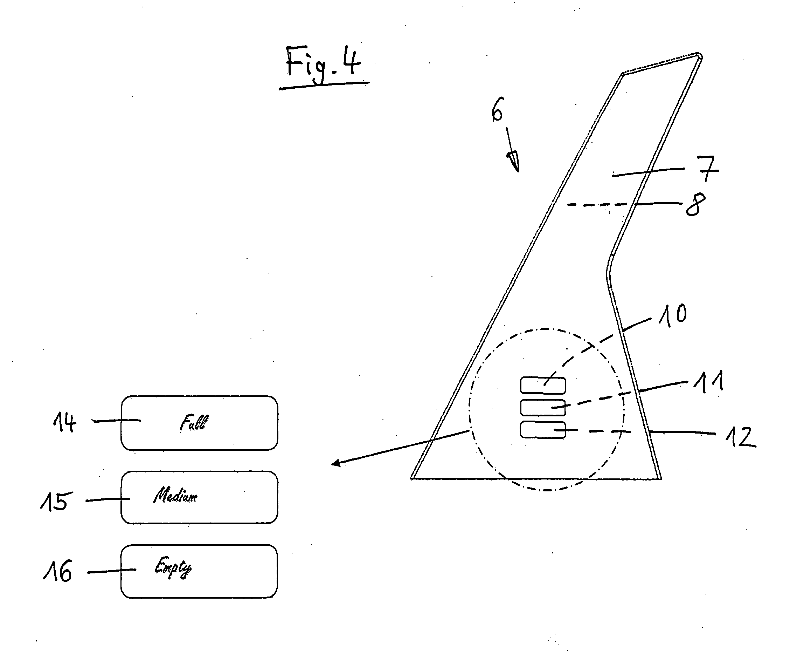

Fig. 4 zeigt die Anzeigeelemente 14, 15, 16, die sich in den Aussparungen 10, 11, 12 befinden, in einer vergrößerten Darstellung. Die Anzeigeelemente 13, 14, 15 bilden eine Ladekontrollanzeige für ein Kraftfahrzeug mit Batterieantrieb. Das Anzeigeelement 14 ist ein beleuchtetes Anzeigeelement in grüner Farbe mit der Aufschrift "Full". Es befindet sich in der Aussparung 10 und zeigt den vollen Ladezustand der Batterie an. Das Anzeigeelement 15 ist ein beleuchtetes Anzeigeelement in gelber Farbe mit der Aufschrift "Medium". Es befindet sich in der Aussparung 11 und zeigt einen mittleren Ladezustand der Batterie an. Das Anzeigeelement 16 ist ein beleuchtetes Anzeigeelement in roter Farbe mit der Aufschrift "Empty". Es befindet sich in der Aussparung 12 und zeigt einen ungenügenden Ladezustand der Batterie. Die erste Komponente 7 ist derart semitransparent, daß die Anzeigeelemente 13, 14, 15 im beleuchteten Zustand durch die erste Komponente 7 hindurch sichtbar sind.

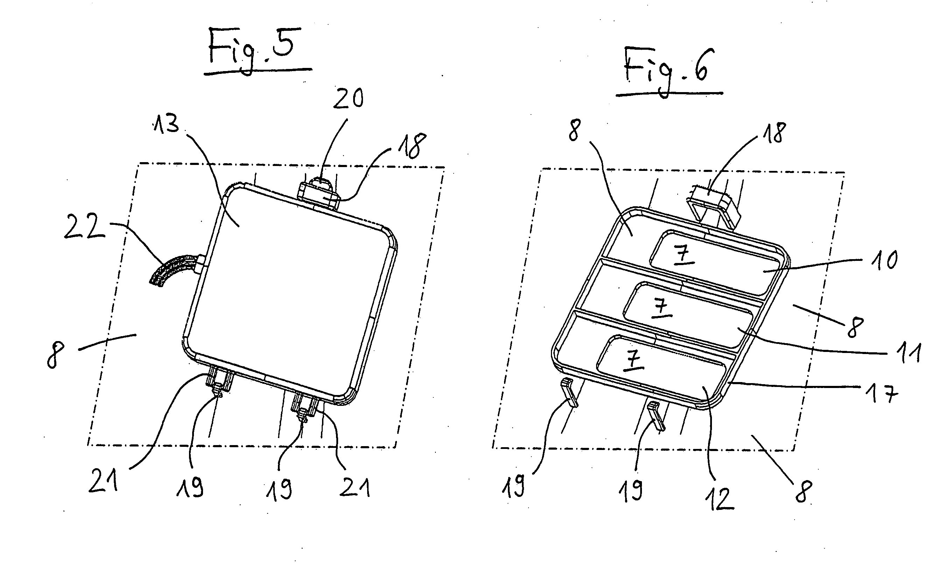

Fig. 5 und 6 zeigen die Blende 6 in einer der Fig. 3 entsprechenden Darstellung von innen. Die zweite Komponente 8 weist Befestigungselemente für das Gehäuse 13 auf. Die Befestigungselemente werden von einem umlaufenden Rahmen 17, einem ersten Haken 18 und zwei zweiten Haken 19 gebildet. Die Befestigungselemente 17, 18, 19 sind an der zweiten Komponente 8 angeformt. Sie ragen aus der Ebene der zweiten Komponente 8 heraus.

Die Aussparungen 10, 11, 12 in der zweiten Komponente 8 liegen innerhalb des umlaufenden Rahmens 17. Im Bereich der Aussparungen 10, 11, 12 ist in der Fig. 6 die erste Komponente 7 von hinten sichtbar. Die innerhalb des umlaufenden Rahmens 17 befindliche Umrandung der Aussparungen 10, 11, 12 wird von der zweiten Komponente 8 gebildet.

Die Aussparungen 10, 11, 12 können von dem Gehäuse 13 überdeckt werden. In dem Gehäuse 13 sind die Anzeigeelemente 14, 15, 16 vorgesehen. Das Gehäuse 13 übergreift den umlaufenden Rand 17. Es wird durch seinen ersten Haken 20 mit dem ersten Haken 18 der zweiten Komponente 8 und durch seine zweiten Haken 21 mit den zweiten Haken 19 der zweiten Komponente 8 verhakt, wie in Fig. 5 gezeigt. Die Stromversorgung der Anzeigeelemente 14, 15, 16 erfolgt durch ein Elektrokabel 22.

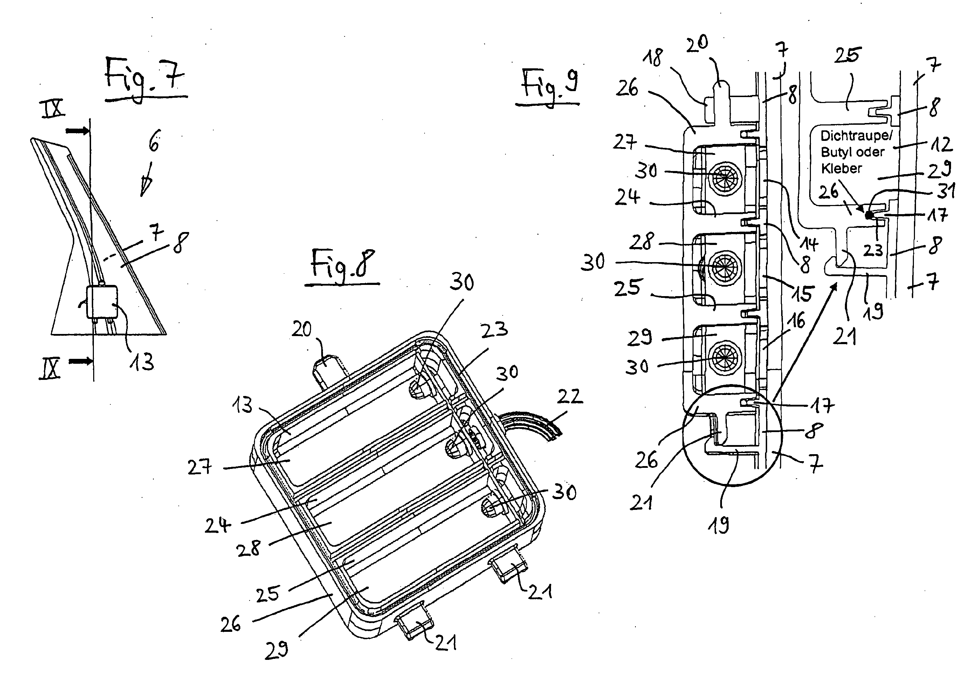

Fig. 8 zeigt das Gehäuse 13 von innen. Seine umlaufende Nut 23 übergreift im montierten Zustand den umlaufenden Rand 17 der zweiten Komponente 8. In dem Gehäuse 13 sind Zwischenwände 24, 25 vorgesehen, die mit der umlaufenden Gehäusewand 26 drei Kammern 27, 28, 29 voneinander abtrennen. In jeder Kammer 27, 28, 29 ist eine Leuchtdiode 30 vorgesehen, die die jeweilige Kammer 27, 28, 29 beleuchtet.

Wie aus Fig. 9 ersichtlich liegt das Anzeigeelement 14 in der Kammer 27. Es wird von der Leuchtdiode 30 der Kammer 27 beleuchtet. Das Anzeigeelement 15 liegt in der Kammer 28 und wird von deren Leuchtdiode 30 beleuchtet. In entsprechender Weise liegt das Anzeigeelement 16 in der Kammer 29 und wird von deren Leuchtdiode 30 beleuchtet. Die Anzeigeelemente 14, 15, 16 füllen die Aussparungen 10, 11, 12 in der zweiten Komponente 8 jeweils vollständig aus. In der vergrößerten Teildarstellung von Fig. 9 ist das Anzeigeelement 16 weggelassen; an seiner Stelle ist die Aussparung 12 zu sehen.

Zwischen dem Grund der umlaufenden Nut 23 der Gehäusewand 26 und der oberen Endfläche des umlaufenden Rahmens 17 der zweiten Komponente 8 ist eine umlaufende Dichtung 31 vorgesehen, durch die das Gehäuse 13 abgedichtet wird. Insbesondere erfolgt eine Abdichtung gegen Spritzwasser, das bei Regen oder beim Waschen des Kraftfahrzeugs hinter die Blende 6 gelangen kann. Die umlaufende Dichtung 31 kann durch eine Dichtraupe realisiert werden, insbesondere durch Butyl oder Kleber.

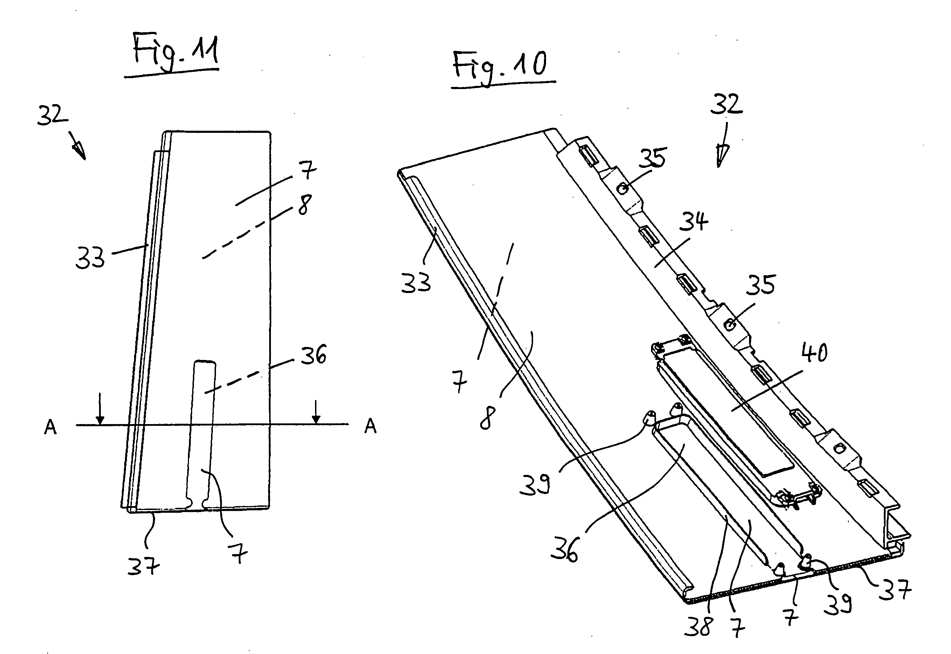

Fig. 10 und 11 zeigen eine weitere Ausführungsform einer Blende 32, die im wesentlichen derjenigen der EP 1 695 808 A1 entspricht, auf die Bezug genommen wird. Auch die Blende 32 ist in einem Zweikomponenten-Spritzgußverfahren hergestellt. Die zweite Komponente 8 weist eine Befestigungsleiste 33 und ein Befestigungsprofil 34 auf, das mit Befestigungslöchern 35 und weiteren mechanischen Befestigungselementen versehen ist. Die zweite Komponente 8 weist ferner eine Aussparung 36 auf, die im wesentlichen rechteckig ist und in Längsrichtung der Blende 32 verläuft. Die Aussparung 36 reicht bis zu dem Rand 37 der Blende 32.

Die Befestigungselemente der Blende 32 werden von einem U-förmigen Rahmen 38 und Ansätzen 39 für Befestigungsschrauben oder Niete gebildet, durch die das Gehäuse 40 an der Blende 32, nämlich an dessen zweiter Komponente 8 befestigt werden kann. Die Befestigungselemente 38, 39 sind an die zweite Komponente 8 angeformt. Sie werden bei der Herstellung der Blende zusammen mit der zweiten Komponente 8 in einem Mehrkomponentenverfahren, insbesondere einem 2-K-Verfahren, hergestellt.

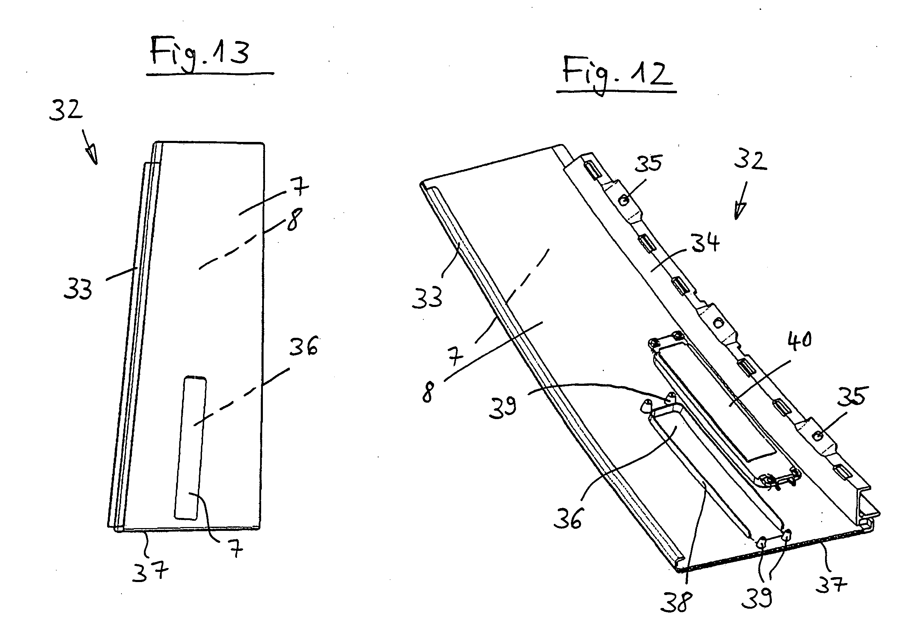

Fig. 12 und 13 zeigen eine Abwandlung der Blende 32 der Fig. 10 und 11, bei der entsprechende Teile mit denselben Bezugszeichen versehen sind und nicht erneut beschrieben werden. Im Unterschied zur Blende 32 nach Fig. 10 und 11 reicht bei der Blende nach Fig. 12 und 13 die Aussparung 36 nicht bis zum Rand 37 der Blende 32. Hier endet die Aussparung 36 vor diesem Rand 37. Die Aussparung 36 wird von der Grundfläche der zweiten Komponente 8 allseits umschlossen.

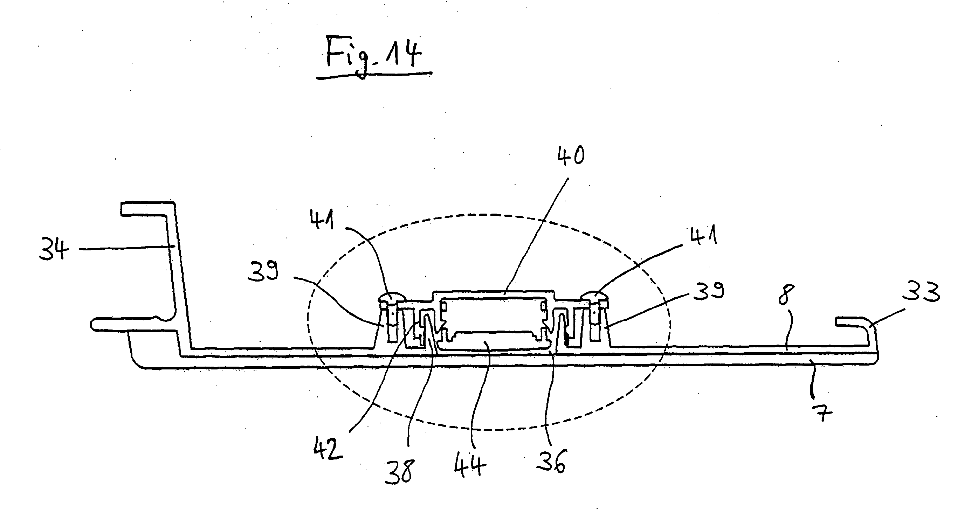

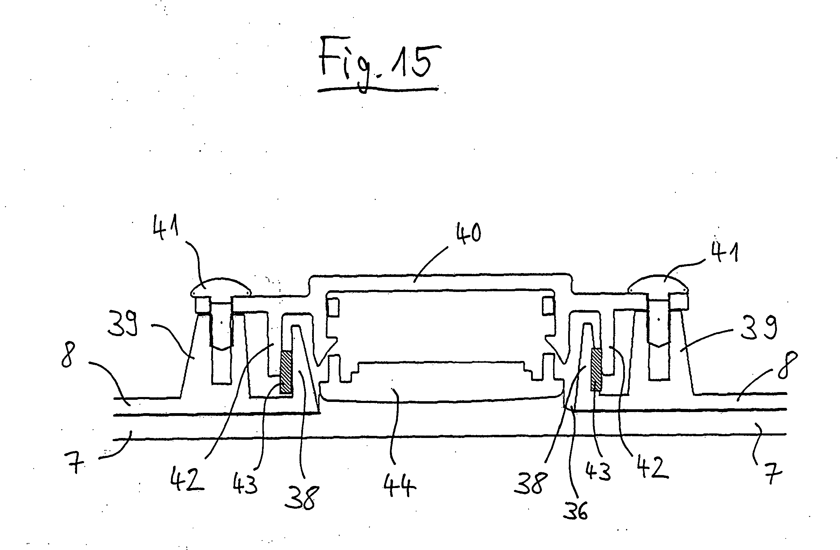

Fig. 14 und 15 zeigen einen Schnitt längs der Linie A-A in Fig. 11. Das Gehäuse 40 ist durch Schrauben oder Niete 41 an den Ansätzen 39 der zweiten Komponente 8 befestigt. Der umlaufende Rand 42 des Gehäuses 40 umschließt den U-förmigen Rahmen 38 der zweiten Komponente 8. Das Gehäuse 40 ist durch eine Dichtung 43 abgedichtet, die sich zwischen dem umlaufenden Rand 42 und dem U-förmigen Rahmen 38 befindet.

In dem Gehäuse 40 ist ein Tastenfeld 44 eines Zugangssystems angeordnet. Das Tastenfeld 44 weist Anzeigeelemente und Eingabeelemente auf. Das Licht, das von den Anzeigeelementen ausgeht, durchdringt die erste Komponente 7 und macht diese Anzeigeelemente auf diese Weise sichtbar. Die Eingabeelemente können durch die erste Komponente 7 hindurch betätigt werden, insbesondere durch Fingerdruck.

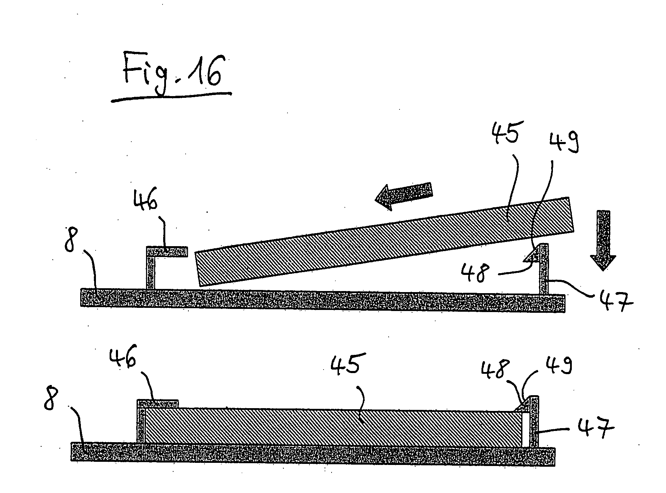

Fig. 16 zeigt eine andere Ausführungsform eines Tastenfeld 45, das eine Leuchteinheit aufweist. Hier ist kein Gehäuse vorhanden. An der zweiten Komponente 8 sind ein L-förmiger Halter 46 und ein Halteansatz 47 mit einem Widerhaken 48, der eine schräge Einführfläche 49 aufweist, angeformt. Das Tastenfeld 45 wird zunächst schräg unter den L-förmigen Halter 46 eingeschoben, wie in der oberen Abbildung gezeigt, und anschließend über die Schrägfläche 49 des Widerhakens 48 eingedrückt, wobei sich der flexible Halteansatz 47 nach außen, also von dem Tastenfeld 45 weg, elastisch verformt. Im Bereich des Tastenfelds 45 sind in der zweiten Komponente 8 eine oder mehrere Aussparungen vorhanden, die in Fig. 16 nicht dargestellt sind.

Durch die Erfindung wird eine Fahrzeugblende aus Kunststoff mit einem integrierten Informationsfenster geschaffen. In dem transparenten oder semitransparenten Fenster können Informationen optisch angezeigt werden. Dabei kann es sich insbesondere um folgende Informationen handeln: Ladekontrolle bei Autos mit Batteriebetrieb; Parkzeitanzeige zur Anzeige des gelösten digitalen Parkscheins (grün/rot); Tastenfeld zur Eingabe eines Zugangscodes zum Fahrzeug; Fingerprint zur Zugangsberechtigung in das Fahrzeug; Zustandsanzeige bei einem Taxi (besetzt/frei); Schriftzüge und Logos (GTI, Ghia etc.); Anzeigefläche vollflächig als Designelement; Blinkfunktion; Anzeige des Fahrzeugzustandes (geöffnet/geschlossen), insbesondere beim Verlassen und/oder beim Annähern des Fahrers/Besitzers; Anzeige der Fahrzeugposition für andere Verkehrsteilnehmer, insbesondere durch eine Reflektionsfolie, insbesondere bei schlechter Sicht und/oder nachts.

Bei der Erfindung kann die zweite Komponente eine Funktionsschicht bilden, die teilweise ausgespart ist, um Informationen durchscheinen zu lassen. Die erste Komponente eine Dekorationsfläche oder Deckfläche bildet.

Sie kann Erhebungen in Form eines Logos oder eines Schriftzuges aufweisen. Diese erhobenen Konturen können von hinten beleuchtet werden. Die Blende einschließlich ihrer Komponenten ist ein Formteil, welches vorzugsweise im Spritzgußverfahren hergestellt ist. Die Blende ist für den Fahrzeugaußenbereich vorgesehen.

Sie ist auf einer der Säulen des Fahrzeugs (A-Säule, B-Säule, C-Säule) und/oder auf einer Fahrzeugtür zu befinden.

An der Blende können Befestigungselemente (Clipse, Schraubdome, Schweißstege etc.) zur Befestigung der Anzeigelemente oder Eingabeelemente oder einer Leuchteinheit direkt angeformt sein.

Es ist möglich, daß die Anzeigeelemente und/oder Eingabeelemente erst bei einer Aktivierung sichtbar werden. Die Anzeigeelemente und/oder Eingabeelemente können allerdings auch ständig aktiviert sein. Sie können als Leuchtelemente ausgestaltet sein.

Bei einem Auto mit Batterieantrieb kann eine Ladestromkontrolle im (C-pillar) Capping integriert sein. Hierdurch kann der Kunde bzw. Fahrer auch bei einem Elektrofahrzeug ein Feedback über den Ladezustand erhalten. Die Kontrolle kann über eine einfache LED erfolgen oder über mehrere, beispielsweise drei verschiedene Farben. Es ist auch möglich, die verbleibende Reichweite in Kilometer als Zahl oder die noch verbleibende Zeit der Batterienutzung anzuzeigen.

Durch die Erfindung kann eine Reflektionsfolie realisiert werden. Reflektoren dienen im Straßenverkehr zur Erhöhung der Verkehrssicherheit. Sie sind in der Regel direkt in den Scheinwerfern integriert oder an den Stoßfängern befestigt. Die erfindungsgemäße Lösung mit transparenter oder semitransparenter Deckschicht ermöglicht die einfache Integration der Reflektoren in eine Blende, ohne daß diese störend wirken. Insbesondere können Reflektoren in den seitlichen Bereichen des Fahrzeugs positioniert werden, wodurch die Verkehrssicherheit zusätzlich erhöht werden kann.

## Patentansprüche

1. Blende aus Kunststoff für den Außenbereich eines Fahrzeugs für eine der Säulen des Fahrzeugs und/oder für eine Fahrzeugtüre
mit einer ersten Komponente (7) aus Kunststoff, die eine Dekorationsfläche oder Deckfläche bildet und die zumindest teilweise transparent oder semitransparent ist,
und mit einer zweiten Komponente (8) aus Kunststoff, die hinter der ersten Komponente (7) liegt,
**dadurch gekennzeichnet,**
**dass** die zweite Komponente (8) eine oder mehrere Aussparungen (10, 11, 12; 36) für ein Tastenfeld (44, 55) und/oder für einen Sensor aufweist, wobei das Tastenfeld, das Anzeigeelemente aufweist, und/oder der Sensor in der oder den Aussparungen angeordnet ist bzw. sind,
wobei die Blende in einem Mehrkomponenten-Spritzgussverfahren hergestellt ist,
und wobei das Tastenfeld und/oder der Sensor selbstleuchtend oder beleuchtbar ist oder sind.

2. Blende nach Anspruch 1, **dadurch gekennzeichnet, dass** die erste Komponente (7) aus einem thermoplastischen Kunststoff, vorzugsweise aus PMMA, besteht.

3. Blende nach Anspruch 1 oder 2, **dadurch gekennzeichnet, dass** die erste Komponente (7) eine glänzende, durchgehende, vorwiegend glatte Oberfläche aufweist.

4. Blende nach einem der vorhergehenden Ansprüche, **dadurch gekennzeichnet, dass** die zweite Komponente (8) aus einem thermoplastischen Kunststoff, vorzugsweise aus ABS, besteht.

5. Blende nach einem der vorhergehenden Ansprüche, **dadurch gekennzeichnet, dass** an der zweiten Komponente (8) eines oder mehrere Befestigungselemente (17, 18, 19; 38, 39; 46, 47, 48, 49) zur Befestigung des Tastenfelds und/oder des Sensors vorgesehen, insbesondere angeformt sind.

6. Blende nach einem der vorhergehenden Ansprüche, **dadurch gekennzeichnet, dass** an der zweiten Komponente (8) ein vorzugsweise abdichtbares oder abgedichtetes (31; 43) Gehäuse (13; 40) für das Tastenfeld und/oder für den Sensor befestigbar oder befestigt (17, 18, 19, 20, 21; 38, 39, 41) ist.

7. Blende nach einem der vorhergehenden Ansprüche, **dadurch gekennzeichnet, dass** die ersten Komponente (7) eine Sichtfläche bildet.

8. Blende nach einem der vorhergehenden Ansprüche, **dadurch gekennzeichnet, dass** das Tastenfeld (44, 55) und/oder der Sensor Eingabeelemente aufweist, die durch die erste Komponente (7) hindurch betätigt werden können.

9. Blende nach einem der vorhergehenden Ansprüche, **dadurch gekennzeichnet, dass** die zweite Komponente (8) eine schwarze Farbe aufweist.

10. Blende nach einem der vorhergehenden Ansprüche, **dadurch gekennzeichnet, dass** die zweite Komponente (8) ein Befestigungsprofil (34) aufweist.

11. Fahrzeug, insbesondere Kraftfahrzeug, **gekennzeichnet durch** eine Blende nach einem der Ansprüche 1 bis 10.

## Claims

1. A trim made of plastics for the exterior of a vehicle, for one of the pillars of the vehicle and/or for a vehicle door
with a first component (7) made of plastics, which forms a decoration surface or covering surface and which is at least partly transparent or semi-transparent,
and with a second component (8) made of plastics, which lies behind the first component (7),
**characterized in**
**that** the second component (8) includes one or more cutouts (10, 11, 12; 36) for a keypad (44, 55) and/or for a sensor, wherein the keypad, which includes display elements, and/or the sensor is/are arranged in the cutout or the cutouts,
wherein the trim is manufactured by a multicomponent injection molding method,
and wherein the keypad and/or the sensor is or are self-luminous or illuminable.

2. The trim according to claim 1, **characterized in that** the first component (7) is made of a thermoplastic material, preferably of PMMA.

3. The trim according to claim 1 or 2, **characterized in that** the first component (7) has a glossy, continuous, chiefly smooth surface.

4. The trim according to any of the preceding claims, **characterized in that** the second component (8) is made of a thermoplastic material, preferably of ABS.

5. The trim according to any of the preceding claims, **characterized in that** one or more fastening elements (17, 18, 19; 38, 39; 46, 47, 48, 49) for fastening the keypad and/or the sensor are provided on, in particular molded to the second component (8).

6. The trim according to any of the preceding claims, **characterized in that** a preferably sealable or sealed (31; 43) housing (13; 40) for the keypad and/or for the sensor is attachable or attached (17, 18, 19, 20, 21; 38, 39, 41) to the second component (8).

7. The trim according to any of the preceding claims, **characterized in that** the first component (7) forms a visible surface.

8. The trim according to any of the preceding claims, **characterized in that** the keypad (44, 55) and/or the sensor includes input elements which can be actuated through the first component (7).

9. The trim according to any of the preceding claims, **characterized in that** the second component (8) has a black color.

10. The trim according to any of the preceding claims, **characterized in that** the second component (8) includes a fastening profile (34).

11. A vehicle, in particular a motor vehicle, **characterized by** a trim according to any of claims 1 to 10.

## Revendications

1. Panneau en matière plastique pour la zone extérieure d'un véhicule, pour un des montants du véhicule et/ou pour une portière de véhicule,
comportant un premier composant (7) en matière plastique qui forme une surface décorative ou une surface de recouvrement et qui est au moins partiellement transparent ou semi-transparent,
et un deuxième composant (8) en matière plastique qui est situé derrière le premier composant (7),
**caractérisé en ce que**
le deuxième composant (8) présente un ou plusieurs évidements (10, 11, 12 ; 36) pour un clavier (44, 55) et/ou pour un capteur, le clavier qui présente des éléments d'affichage et/ou le capteur étant agencé(s) dans les évidements,
le panneau étant réalisé selon un procédé de moulage par injection de multi-composants,
et le clavier et/ou le capteur étant autoluminescent(s) ou éclairable(s).

2. Panneau selon la revendication 1, **caractérisé en ce que** le premier composant (7) est en matière plastique thermoplastique, de préférence en PMMA.

3. Panneau selon la revendication 1 ou 2, **caractérisé en ce que** le premier composant (7)' présènte une surface brillante, continue et principalement lisse.

4. Panneau selon l'une des revendications précédentes, **caractérisé en ce que** le deuxième composant (8) est en matière plastique thermoplastique, de préférence en ABS.

5. Panneau selon l'une des revendications précédentes, **caractérisé en ce que** sur le deuxième composant (8) sont prévus, en particulier conformés un ou plusieurs éléments de fixation (17, 18, 19 ; 38, 39 ; 46, 47, 48, 49) pour fixer le clavier et/ou le capteur.

6. Panneau selon l'une des revendications précédentes, **caractérisé en ce que** sur le deuxième composant (8) peut être fixé ou est fixé (17, 18, 19, 20, 21 ; 38, 39, 41) un boîtier (13 ; 40) qui, de préférence, peut être étanché ou est étanche (31 ; 43) pour le clavier et/ou pour le capteur.

7. Panneau selon l'une des revendications précédentes, **caractérisé en ce que** le premier composant (7) forme une surface visible.

8. Panneau selon l'une des revendications précédentes, **caractérisé en ce que** le clavier (44, 55) et/ou le capteur présente des éléments d'entrée qui peuvent être actionnés à travers le premier composant (7).

9. Panneau selon l'une des revendications précédentes, **caractérisé en ce que** le deuxième composant (8) présente une couleur noire.

10. Panneau selon l'une des revendications précédentes, **caractérisé en ce que** le deuxième composant (8) présente un profil de fixation (34).

11. Véhicule, en particulier véhicule automobile, **caractérisé par** un panneau selon l'une des revendications 1 à 10.
